# EUROPÄISCHE PATENTANMELDUNG

(11) **EP 1 221 530 A2**
(43) Veröffentlichungstag der Anmeldung: **10.07.2002**
(21) Anmeldenummer: 02000349.7
(22) Anmeldetag: 04.01.2002
(51) Int. Cl.: E06B 9/323, E06B 9/42, A47H 1/13

(54) **Jalousiehalter**

(30) Priorität: 05.01.2001 DE 20100118 U
(71) Anmelder: Iversen, Hans, 8900 Randers (DK)
(72) Erfinder: Iversen, Hans, 8900 Randers (DK)
(74) Vertreter: Schupfner, Georg U.

(57) **Zusammenfassung**

Die Erfindung bezieht sich auf einen Jalousiehalter, der auf Querholme (1) von Fenstern und Türen aufsteckbar ist und allein durch Klemmwirkung auf einem solchen Holm festsitzt, indem er den Querholm (1) auf seiner Außenseite mit einem Ausleger (12) hintergreift und die Oberleiste (9) der Jalousie (5) mit einer Gehäusewand (9b) über eine Schulter (11) an die Innenseite des Holmes heranzieht. Der Jalousiehalter weist einen U-förmigen Klammerteil (13) auf, der zum Einstecken in das Gehäuse (9) der Jalousie (5) vorgesehen und mit Klammerarmen (13a,13d) versehen ist, deren Enden (13e,13f) im Ruhezustand auseinander federn, wobei der eine dem Untergreifen einer Falztasche (9f) der Gehäusewand (9b) dient, die am Holm anliegt, und der andere, der mit dem Ausleger (12) über die federnde Schulter(11) verbunden ist, eine Einwölbung zum Klammerinneren (13b) aufweist zur Aufnahme der Jalousiewelle (10).

## Beschreibung

Die Erfindung bezieht sich auf einen Jalousiehalter, der auf Querholme von Fenstern und Türen aufsteckbar ist und allein durch Klemmwirkung auf einem solchen Holm festsitzt, indem er den Holm auf seiner Außenseite mit einem Ausleger hintergreift und die Oberleiste der Jalousie mit einer Gehäusewand über eine Schulter an die Innenseite des Holmes heranzieht.

Aus der EP 0 866 205-A2 ist ein Jalousiehalter bekannt, der einen auf einen Querholm eines Fensters aufklemmbaren Klemmschuh aufweist. Der Klemmschuh besteht aus einer Schulter und zwei Klemmflanschen, deren freie Enden gegen die Innenseite und die Außenseite des Querholmes federn. Auf der Innenseite des Querholmes ist ein plattenförmiges Befestigungsteil angebracht. Während der eine Klemmflansch dieses plattenförmige Befestigungsteil gegen die Innenseite drückt, drückt der andere Klemmflansch gegen einen Falz an der Außenseite. An dem Befestigungsteil wird das Gehäuse einer Jalousie, eine Sonnen- oder Blickschutzeinrichtung, beispielsweise durch Schrauben, befestigt.

Es gibt Jalousien, die abgekantete Oberleisten aufweisen, die im montierten Zustand parallel zum Querholm verlaufen. Diese Jalousien lassen sich mit dem bekannten Jalousiehalter montieren. Der Nachteil ist aber, dass sich zwischen dem Gehäuse der Oberleiste und dem Holm das plattenförmige Befestigungsteil befindet. Außerdem muss die Jalousie an das Befestigungsteil angeschraubt werden.

Es ist Aufgabe der Erfindung, einen Jalousiehalter zu schaffen, mit dem die Oberleiste der Jalousie unmittelbar am Holm angelegt werden kann und der eine besondere Befestigungsvorrichtung, wie eine Schraubverbindung, überflüssig macht.

Die gestellte Aufgabe ist erfindungsgemäß gelöst durch einen U-förmigen Klammerteil des Halters, der mit Klammerarmen zum Einstecken in das Gehäuse der Oberleiste der Jalousie vorgesehen ist und, deren Enden im Ruhezustand auseinander federn, wobei der eine dem Untergreifen einer Falztasche der Gehäusewand der Oberleiste dient, die am Holm anliegt, und der andere, der mit dem Ausleger über die federnde Schulter verbunden ist, eine Einwölbung zum Klammerinneren aufweist zur Aufnahme der Jalousiewelle.

Der Jalousiehalter hat mehrere Vorteile. So legt er die Oberleiste der Jalousie unmittelbar am Holm fest, da das plattenförmige Befestigungsteil wegfällt. Weiterhin untergreift der eine Klammerarm die abgekantete Oberkante des Gehäuses der Oberleiste. Auf diesem Klammerarm ruht also die Oberkante der Jalousie; sie ist durch ihn gegen ein Abrutschen und ein Wegkippen gesichert. Der andere Klammerarm wird dabei an der Jalousiewelle vorbeigeführt um ein Drehen der Welle nicht zu behindern.

Nach einer weiteren Ausgestaltung der Erfindung ist vorgesehen, dass die Klammerarme auseinanderspreizend einerseits in die Gehäusefalz und andererseits gegen die gegen den Holm gerichtete Gehäusewand und/oder gegen die nach unten gerichtete Gehäusewand der Oberleiste drücken. Die Anlage am Holm wird damit verbessert.

In weiterer Ausgestaltung der Erfindung ist vorgesehen, dass die Schulter nach oben gewölbt ist und den Klammerteil derart führt, dass er mit dem Klammerboden beim Aufschieben des Jalousiehalters auf die Oberleiste in den Zwischenraum zwischen der Gehäusewand am Holm und der Jalousiewelle einfährt. Das erleichtert die Montage.

Nach einer weiteren Ausgestaltung der Erfindung ist vorgesehen, dass die Wölbung der Schulter so bemessen ist, dass sich der Jalousiehalter an Holme unterschiedlicher Stärke anpasst. Die Einsetzbarkeit des Jalousiehalters wird damit vergrößert.

Nach einer weiteren Ausgestaltung der Erfindung ist vorgesehen, dass der den Holm an seiner Außenseite hintergreifende Ausleger an der Holmaußenseite, vorzugsweise am unteren Ende, mit einer Verstärkung versehen ist. Diese Verstärkung erleichtert das Aufschieben des Jalousiehalters auf den Holm und vermindert den Druck auf die Gummidichtung.

Nach einer weiteren Ausgestaltung der Erfindung ist vorgesehen, dass der Jalousiehalter aus einem gebogenen Streifen eines federelastischen Kunststoffmaterials besteht. Vorzugsweise sind die Streifenränder gut abgerundet. Insgesamt lässt sich der Jalousiehalter, u.a. auch weil er keine scharfen Kanten hat, gefahrlos und leicht montieren.

Die Jalousie ist eine Sonnen- oder Blick-, Wind- und/oder Insektenschutzvorrichtung, wie eine Plisee-Jalousie, ein Rollo oder eine senkrecht oder waagerecht Lammellen-Jalousie, vorzugsweise eine Lamellen Jalousie.

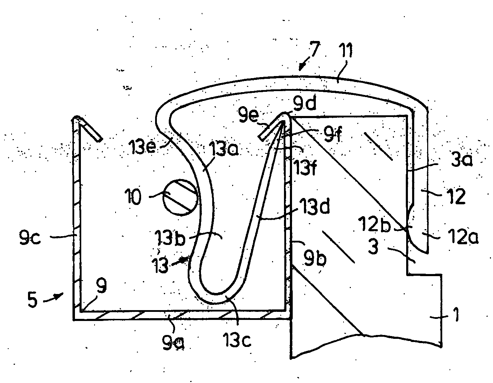

Die Erfindung wird anhand der Zeichnung näher erläutert. Die Figur zeigt einen Jalousiehalter nach der Erfindung, der auf einen Holm eines Fensters oder einer Tür aufgesetzt ist und in das Gehäuse der Oberleiste einer Jalousie eingreift. Der Jalousiehalter besteht aus einem formelastischen Kunststoffstreifen.

In der Schnittzeichnung ist mit 1 der obere Querholm eines Fensters oder einer Tür dargestellt. An der Außenseite hat der Querholm einen Fensterfalz 3.

Zum Befestigen einer Jalousie 5 an dem Holm 1 dienen Jalousiehalter 7, von denen nur ein Halter 7 dargestellt ist. Von der Jalousie 5 ist vereinfacht auch nur das geschnittene dargestellte Gehäuse 9 der Oberleiste gezeichnet. Dieses vorzugsweise aus Blech aufgefaltete Gehäuse 9 besteht aus einer Bodenwand 9a, einer sich an den Holm 1 anlegenden Außenwand 9b und einer Innenwand 9c. Die Bodenwand 9a verläuft horizontal. Die Außenwand 9b und die Innenwand 9c verlaufen vertikal. Parallel zum Gehäuse 9 der Oberleiste erstreckt sich nahezu in seinem Zentrum eine Jalousiewelle 10. Die Oberkante 9d der Außenwand 9b ist abgekantet. Der durch das Abkanten gebildete Falzstreifen 9e steht nach innen und unten von der Außenwand 9b ab. Damit entsteht eine Falztasche 9f, in die das freie Ende 13f eines Klammerarmes 13d eingreifen kann.

Der Jalousiehalter 7 besteht aus einer Schulter 11, die einen Ausleger 12 aufweist, der sich an die vertikale Wand 3a des Holmes 1 anlegt. Das freie Ende 12a des Auslegers 12 ist zur Wand 3a hin mit einer Verstärkung 12b versehen. Die Schulter 11 wölbt sich nach oben gebogen über die Jalousie 5. Über der Jalousie ist der den Jalousiehalter 7 bildende Streifen aus federelastischem Kunststoff mit dem Klammerarm 13a eines Klammerteiles 13 einstückig verbunden. Dieser Klammerarm 13a ist in Richtung auf das Klammerinnere 13b gekrümmt. Das Klammerteil 13 ist U-förmig gebogen; es hat einen Klammerboden 13c und einen weiteren Klammerarm 13d. Die Klammerarme 13a und 13d spreizen aufgrund einer inneren Spannkraft an ihren Enden 13e und 13f auseinander, soweit sie dazu in der Lage sind und die Freiheit haben.

In der Zeichnung ist der Jalousiehalter 7 in das Gehäuse 9 der Oberleiste eingesetzt. Dieses Einsetzen erfolgt auf folgende Weise:

Der Jalousiehalter 7 wird über den Holm 3 gedrückt. Das Gehäuse 9 der Oberleiste wird von unter in den Jalousiehalter 7 gedrückt. Dabei dringt das Klammerteil 13 in das Gehäuse 9 ein und zwar zwischen der Jalousiewelle 10 und der Außenwand 9b. Das Eindrücken wird solange fortgesetzt bis das freie Ende 13f des Klammerarmes 13d hörbar in die Falztasche 9f der Gehäusewand 9b schnappt. Dies ist als ein Klick deutlich hörbar.

Nun kann die Jalousie 5 mit ihrem Gehäuse 9 nicht mehr nach unten abrutschen. Daran hindert sie der Klammerarm 13d. Das Gehäuse 9 der Oberleiste der Jalousie 5 kann unten auch nicht mehr vom Holm 1 wegkippen. Das wird vom Klammerarm 13a verhindert, in dessen Krümmung die Jalousiewelle liegt. Da der Jalousiehalter 7 mit seinem gekrümmten Klammerarm 13a der Jalousiewelle 10 Platz lässt, kann er an beiden Enden des Gehäuses 9 mittig montiert werden.

Der Bogen der Schulter 11 und der Abstand des Klammerteiles 13 von dem Ausleger 12 sind so ausgelegt, dass die Federkraft zwischen dem Ausleger 12 und dem Klammerteil 13 die Gehäusewand 9b fest an den Holm 1 andrückt und gleichzeitig so flexibel ist, dass sich der Jalousiehalter 7 unterschiedlichen Stärken des Holmes 1 anpasst.

Der Jalousiehalter 7 ist insbesondere für Fenster und Türen aus Kunststoff oder Holz geeignet, weil am Holm keinerlei Veränderungen vorgenommen werden.

Der Jalousiehalter 7 hat keine scharfen Kanten oder Knicke. Seine Kanten sind außerdem gut abgerundet. Die Montage lässt sich so gefahrlos vollziehen. Die Montage erfolgt auch in Sekundenschnelle. Die Montagezeit ist damit verkürzt. Der Jalousiehalter 7 ist nach der Montage nicht sichtbar. Man sieht nur die Jalousie 5.

Der Jalousiehalter 7 hält die Jalousie 5 nur an der zum Holm 1 gelegenen Gehäusewand 9b fest. Damit ist der Jalousiehalter 7 verwendbar für Oberleisten 9 mit unterschiedlichen Höhen und Breiten.

## Patentansprüche

1. Jalousiehalter, der auf Querholme (1) von Fenstern und Türen aufsteckbar ist und allein durch Klemmwirkung auf einem solchen Holm festsitzt, indem er den Querholm (1) auf seiner Außenseite mit einem Ausleger (12) hintergreift und die Oberleiste (9) der Jalousie (5) mit einer Gehäusewand (9b) über eine Schulter (11) an die Innenseite des Holmes heranzieht, **gekennzeichnet durch** einen U-förmigen Klammerteil (13) des Halters (7), der zum Einstecken in das Gehäuse (9) der Jalousie (5) vorgesehen und mit Klammerarmen (13a,13d) versehen ist, deren Enden (13e,13f) im Ruhezustand auseinander federn, wobei der eine dem Untergreifen einer Falztasche (9f) der Gehäusewand (9b) dient, die am Holm anliegt, und der andere, der mit dem Ausleger (12) über die federnde Schulter (11) verbunden ist, eine Einwölbung zum Klammerinneren (13b) aufweist zur Aufnahme der Jalousiewelle (10).

2. Jalousiehalter nach Anspruch 1, **dadurch gekennzeichnet, dass** die Klammerarme (13a, 13d) auseinanderspreizend einerseits in der Falztasche (9f) gegen die Gehäusewand (9b) drücken und die Jalousiewelle (10) frei drehbar aussparen.

3. Jalousiehalter nach Anspruch 1 und/oder 2, **dadurch gekennzeichnet, dass** die Schulter (11) nach oben gewölbt ist und den Klammerteil (13) derart führt, dass er mit dem Klammerboden (13c) beim Aufschieben des Jalousiehalters (7) auf der Jalousie (5) in den Zwischenraum (13b) zwischen der Gehäusewand (9b) am Holm (1) und der Jalousiewelle (10) einfährt.

4. Jalousiehalter nach einem oder mehreren der Ansprüche 1 bis 3, **dadurch gekennzeichnet, dass** die Wölbung der Schulter (11) so bemessen ist, dass sich der Jalousiehalter (7) an Holme (1) unterschiedlicher Stärke anpasst.

5. Jalousiehalter nach einem oder mehreren der Ansprüche 1 bis 4, **dadurch gekennzeichnet, dass** der den Holm (1) hintergreifende Ausleger (12) an der Holmseite mit einer Verstärkung (12b) versehen ist.

6. Jalousiehalter nach einem der Ansprüche 1 bis 5, **dadurch gekennzeichnet, dass** er aus einem gebogenen Streifen eines federelastischen Kunststoffinaterials besteht.

7. Jalousiehalter nach Anspruch 6, **dadurch gekennzeichnet, dass** die Streifenränder gut abgerundet sind.
